# EUROPÄISCHE PATENTSCHRIFT

(11) **EP 2 323 952 B1**
(45) Veröffentlichungstag und Bekanntmachung des Hinweises auf die Patenterteilung: **11.11.2015**
(21) Anmeldenummer: 09778327.8
(22) Anmeldetag: 04.09.2009
(51) Int. Cl.: C02F 1/32

(54) **DESINFEKTIONSVORRICHTUNG MIT STROMVERSORGUNGSMITTEL UND FLÜSSIGKEITSAUSLAUF**
DISINFECTING DEVICE HAVING POWER SUPPLY MEANS AND FLUID OUTLET
DISPOSITIF DE DÉSINFECTION PRÉSENTANT UN MOYEN D'ALIMENTATION ÉLECTRIQUE ET UNE SORTIE DE LIQUIDE

(30) Priorität: 12.09.2008 DE 102008047069
(43) Veröffentlichungstag der Anmeldung: 25.05.2011
(73) Patentinhaber: KSB Aktiengesellschaft, 67227 Frankenthal (DE)
(72) Erfinder: DORNSEIFER, Frieder, 67269 Grünstadt (DE)
(86) Internationale Anmeldenummer: PCT/EP2009/006412
(87) Internationale Veröffentlichungsnummer: WO 2010/028779

(56) Entgegenhaltungen:
- WO-A2-2005/124236
- CA-A1- 2 437 426
- DE-A1-102006 054 791
- US-B1- 7 270 748

## Beschreibung

Die Erfindung betrifft eine Vorrichtung mit einem Auslauf für eine Flüssigkeit, insbesondere Wasser, wobei die Flüssigkeit am Auslauf aus einem geschlossenen Leitungssystem an eine offene Atmosphäre tritt und mit einem Mittel zur Bestrahlung der Flüssigkeit mit UV-Licht, wobei das Mittel zur Bestrahlung elektrisch versorgbar und am Auslauf angeordnet oder in diesen integriert ist.

Eine derartige Vorrichtung ist aus der US 7,270,748 B1 bekannt. Ein von einer externen Energieversorgung unabhängiges Sterisilationsmodul weist eine transparente Wasserleitung auf, die von einer Vielzahl von UV-Licht emittierenden LEDs umgeben ist. Das Sterilisationsmodul ist in einem Wasserhahn angeordnet oder wird zwischen zwei Schlauchenden montiert. Der Aufbau dieser Desinfektionseinrichtung ist sehr bauraumintensiv und somit nicht für jede Anwendung geeignet.

Aus der DE 10 2006 054 791 A1 ist die Anordnung einer UV-Licht abstrahlenden Lampe innerhalb eines Wasserhahns bekannt, die mit einem im Fließweg des Wasserhahns angeordneten Generator mit Energie versorgt wird. Nachteilig sind der hohe elektrische Energiebedarf und der große erforderliche Einbauraum der UV-Lampe.

Die WO 2005/124236 A2 zeigt eine Duscheinheit mit einem rohrartigen Gehäuse, in dem eine UV-Licht emittierende Quecksilberdampf-Niederdrucklampe innerhalb eines transparenten Schutzrohrs angeordnet ist, an dem die zu desinfizierende Flüssigkeit vorbeiströmt. Für eine derartige Lampe muss viel Bauraum zur Verfügung stehen und darüber hinaus viel Energie zugeführt werden.

Durch die US 2006/0163126 A1 ist eine tragbare Trinkvorrichtung bekannt, die einen Beutel zur Aufnahme von Flüssigkeit aufweist, der über einen Schlauch mit einem Mundstück verbunden ist. Mit Hilfe eines in dem Schlauch angeordneten Aufbereitungsmodules wird die Flüssigkeit mittels in einem keimtötenden Bereich strahlenden UV-LEDs bestrahlt. Eine derartige Vorrichtung ist jedoch nur für geringe Durchflussmengen, wie sie bei Trinkschläuchen oder Trink-Strohhalmen vorkommen, einsetzbar.

Aus der CA 2 437 426 A1 ist eine Waschstation bekannt, welche Wasser zum Händewaschen bereitstellt und das Brauchwasser mit verschiedenen Vorrichtungen, unter anderem auch mittels einer UV-Strahlenquelle im inneren der Waschstation wieder aufbereitet.

Durch die DE 37 86 219 T2 ist eine weitere Vorrichtung bekannt, die ein Element zur Emission von Lichtstrahlen aufweist, mit dem ein Flüssigkeit aufnehmender Behälter oder die Mündung einer Abgabeleitung bestrahlt wird, um dort eine Bakterienvermehrung zu verhindern. Dazu ist bei einer Düse bzw. einem Ausguss eine LED-Diode bzw. ein Elektrolumineszenz-Element so angeordnet, dass ein Abschnitt in der Nähe der Mündung bestrahlt wird, wodurch eine Vermehrung von Bakterien am Mund der Düse verhindert werden soll. Nachteilig ist, dass elektrische Anschlussdrähte unmittelbar von der Düse wegführen, was ein erhebliches Sicherheitsrisiko darstellt. Mit dieser für einen großvolumigen Getränkeautomaten konzipierten Vorrichtung wird versucht eine bestehende Wasserqualität beizubehalten, sie kann aber nicht verbessert werden. Für eine Desinfektion, also einem Abtöten und/oder Unschädlichmachen von bestehenden Bakterien, insbesondere Legionellen, ist die Vorrichtung ungeeignet.

Eine Desinfektionseinrichtung ist durch die WO 82/04481 A1 bekannt. Deren Wasserhahn ist so ausgebildet, dass in seinem Inneren eine röhrenförmige UV-Lampe eingeschoben ist, die von ausfließendem Wasser umströmt wird und dieses dadurch sterilisiert. Nachteilig ist neben dem konstruktiv hohen Aufwand und dem hohen Platzbedarf die zusätzliche externe Steuereinheit, an die die UV-Lampe anzuschließen ist.

Der Erfindung liegt das Problem zu Grunde, eine wenig aufwändige Vorrichtung der eingangs genannten Art zu schaffen, die eine zuverlässige Desinfektion gewährleistet.

Die Lösung des Problems sieht vor, dass die Vorrichtung als Luftsprudler ausgebildet ist, wobei das Mittel zur Bestrahlung für eine Desinfektionswirkung bei niedrigem Energieverbrauch ein oder mehrere UV-C-LEDs aufweist, welche die ausströmende Flüssigkeit unmittelbar vor deren Übertritt in die offene Atmosphäre, an deren Ort des Gebrauchs, desinfizieren und ein elektrisches Versorgungsmittel das Bestrahlungsmittel mit einer Kleinspannung versorgt, die bis zu 25V Wechselspannung oder 60V Gleichspannung beträgt, und das Bestrahlungsmittel in einem Siebeinsatz des Luftsprudlers angeordnet ist.

Infolge der hohen Desinfektionswirkung des Mittels zur Bestrahlung ist erstmals eine Desinfektion einer aus einem Auslauf ausfließenden und/oder ausströmenden Flüssigkeit ermöglicht. Die Vorteile eines erfindungsgemäßen Bestrahlungsmittels als Desinfektionsmittel liegen in seiner sich in Bruchteilen einer Sekunde entfaltenden desinfizierenden, Bakterien abtötenden oder keimtötenden Wirkung. Bakterien, Legionellen, Viren, Hefen und Pilze werden durch die erfindungsgemäße Desinfektionsvorrichtung unschädlich gemacht. Auch bei einer schnell ausströmenden Flüssigkeit und einer damit verbundenen vergleichsweise geringen Verweilzeit einer Flüssigkeit beim Durchströmen einer herkömmlichen, insbesondere für eine Trink-, Brauch- und/oder Grauwasserentnahme vorgesehenen Armatur, Entnahmestelle und/oder Düse ist durch die Erfindung eine zuverlässige Desinfektion der auslaufenden und/oder ausströmenden Flüssigkeit geschaffen. Da die Druckwerte eines Wasserleitungssystems Grenzwerten unterliegen, kann die maximale Strömungsgeschwindigkeit einfach ermittelt und dazu die entsprechende Leistung des Bestrahlungs- oder Desinfektionsmittels festgelegt werden.

Die Desinfektionswirkung ist an die zu desinfizierende Flüssigkeit, insbesondere an deren Trübungsgrad, Temperatur, Bakterien- und/oder Absorptionsrate angepasst. Als Maß für die Desinfektionswirkung wird die Bestrahlungsdosis oder fluenz als dem Produkt aus Bestrahlungsstärke und Einwirkdauer herangezogen. Bei der Trinkwasserbehandlung innerhalb von Gebäuden wird üblicherweise die sogenannte Reduktionsäquivalentfluenz, bezogen auf eine Bestrahlungswellenlänge von 254 nm, angegeben. Für die Trinkwasserbehandlung ist es von Vorteil, dass die Bestrahlungsdosis oder die Reduktionsäquivalentfluenz der erfindungsgemäßen Vorrichtung bei einer Bestrahlungswellenlänge von 254 nm mindestens 400 J/m² oder 40 mJ/cm² betragen kann. Für einige Anwendungen, wie beispielsweise der Nachbehandlung von Trinkwasser an einem Sanitärarmaturenauslauf, haben sich geringere Bestrahlungsdosen als ausreichend erwiesen. Dabei ist es zweckmäßig, wenn die Vorrichtung in etwa eine Bestrahlungsdosis oder eine Reduktionsäquivalentfluenz von mindestens 150 J/m² oder 15 mJ/cm² erbringt.

Durch den niedrigen Energieverbrauch des Bestrahlungs- oder Desinfektionsmittels und durch dessen elektrische Versorgung mit Kleinspannung ist die Erfindung auch bei Sanitärarmaturen, wie Trinkwasserarmaturen, ohne Sicherheitsrisiko verwendbar. Unter einer Kleinspannung versteht man eine elektrische Spannung im Niedervoltbereich. Dabei wird eine Versorgung bis zu 25V Wechselspannung und bis zu 60V Gleichspannung als Kleinspannung oder Schutzkleinspannung bezeichnet. Idealerweise versorgt ein elektrisches Versorgungsmittel gemäß der Erfindung das Bestrahlungsmittel mit einer Spannung, insbesondere einer Gleichspannung, im Niedervoltbereich von bis zu 15 Volt.

Durch die Erfindung ist eine besonders vorteilhafte und einfache Möglichkeit geschaffen, eine Flüssigkeit ohne Sicherheitsrisiko und mit geringem Aufwand an oder in der Nähe der Stelle zu desinfizieren, wo diese aus einem geschlossenen Leitungssystem an eine Atmosphäre tritt. Die Flüssigkeit wird unmittelbar an deren Ort des Gebrauchs, am sogenannten Point of Use (POU), desinfiziert.

Bei einer Integration des elektrischen Versorgungsmittels in den Auslauf und/oder die Vorrichtung, ist eine extern angeordnete Energieversorgungs- oder Stromquelle entbehrlich. Das elektrische Versorgungsmittel ist dabei zweckmäßig in den Auslauf und/oder die Vorrichtung geschützt integriert oder eingebettet. Die Zuleitungen sind nicht mehr freiliegend in unmittelbarer Nähe eines Auslaufes angebracht, sondern ebenfalls in den Auslauf und/oder die Vorrichtung integriert. Sie stellen damit kein Risiko für äußere Angriffe oder schädigende Berührungen dar. Somit ist eine autarke Einheit geschaffen, bei der alle für eine Desinfektion von Flüssigkeiten notwendigen Komponenten in den Auslauf und/oder in die Vorrichtung eingebaut sind. Dem Anwender bietet sich nach außen hin kein Unterschied zu einer herkömmlichen Armatur. Dies ist besonders bei häuslichen Sanitärarmaturen, wie einer Trink-, Brauch- und/oder Grauwasserarmatur, von Vorteil.

Erfindungsgemäß weist das Mittel zur Bestrahlung ein oder mehrere UV-C-Strahler auf. Die Vorteile eines solchen Bestrahlungs- und/oder Desinfektionsmittels sind dessen hohe desinfektionswirksame Strahlungsintensität im Vergleich zu zu Illuminationszwecken verwendeten UV-A und/oder UV-B-Strahlern. Die UV-C-Strahler senden dabei Licht mit einer Wellenlänge von 100 bis 280 nm aus. Als besonders effektiv hat es sich erwiesen, die Desinfektion bei einer Wellenlänge von 254 nm, genauer 253,7 nm, durchzuführen. Bakterien, Legionellen, Viren, Hefen und Pilze werden so zuverlässig unschädlich gemacht.

Erfindungsgemäß weist das Mittel zur Bestrahlung ein oder mehrere UV-C-LEDs aufweist. LEDs, also lichtemittierende Dioden oder Leuchtdioden, sind robust, haben eine geringe Wärmeentwicklung und weisen eine geringe Baugröße bei gleichzeitig hoher Bestrahlungsintensität auf. Ihre Bestrahlungsintensität bleibt über ihren Lebenszeitraum gleich. Sie werden im Kleinspannungsbereich beispielsweise bei 5 bis 12 Volt betrieben und haben einen geringen Energieverbrauch. Die Verlustleistung von UV-C-LEDs ist sehr gering und beträgt je nach Typ zwischen wenigen Mikrowatt und einigen Milliwatt. Darüber hinaus haben LEDs eine Lebensdauer von mehreren tausend Stunden und sind wartungsfrei.

Als besonders zweckmäßig hat es sich erwiesen, wenn das Mittel zur elektrischen Versorgung eine Batterie ist. Durch den geringen Energieverbrauch des Desinfektionsmittels ist nur ein geringer Platzbedarf in einem Auslauf einer erfindungsgemäßen Vorrichtung erforderlich. Der geringe Energieverbrauch des Desinfektionsmittels führt zu einer langen Lebensdauer der Batterie. Daher ist nur ein geringer Wartungsaufwand einer erfindungsgemäßen Vorrichtung erforderlich. Die Batterie ist austauschbar angeordnet oder kann zusammen mit der Vorrichtung ausgetauscht werden.

Alternativ ist das Mittel zur elektrischen Versorgung durch eine Turbine und/oder eine Turbineneinheit gebildet, die von einer durch die Vorrichtung strömenden Flüssigkeit angetrieben wird. Dabei ist die Turbine und/oder Turbineneinheit innerhalb der Vorrichtung angeordnet, so dass deren Schaufeln von der durch die Vorrichtung strömenden Flüssigkeit angetrieben werden. Ein innerhalb der Turbine und/oder Turbineneinheit angeordneter Generator wandelt die Rotationsenergie in elektrische Energie um.

Alternativ ist das Mittel zur elektrischen Versorgung durch ein Solarenergie umwandelndes Mittel gebildet, das am Auslauf und/oder an der Vorrichtung angeordnet ist. Durch ein solches Photovoltaik- oder Solarmodul ist eine langlebige autarke Vorrichtung geschaffen.

Selbstverständlich liegt auch eine Kombination einer Turbine und/oder einem Solarmodul mit einer wiederaufladbaren Batterie, einem Akkumulator, im Rahmen der Erfindung.

Die Wirksamkeit der Flüssigkeits-, insbesondere der Wasserbestrahlung, wird dadurch verbessert, dass der Auslauf im Innern reflektierend und/oder totraumfrei gestaltet ist. Eine gute Reflexion der UV-C-Strahlen im Innern des Auslaufs wird beispielsweise durch polierte Edelstahl- oder Chromoberflächen erreicht. Die Totraumfreiheit und die Reflexion von Umgebungsflächen verringert die erforderliche Lichtintensität bzw. die Verweildauer des Wassers im Beleuchtungs- oder Bestrahlungsbereich.

Idealerweise tritt das Wasser nahe dem Mittel zur Bestrahlung aus. Das Bestrahlungsmittel bestrahlt die Austrittsflächen des Auslaufes, bevor das Wasser austritt. Bakterien, die sich während einer Wasserentnahmepause an den Austrittsflächen angesiedelt haben, werden unschädlich gemacht.

Zum Einschalten des Bestrahlungsmittels kann in der Vorrichtung ein Näherungsschalter angeordnet sein, der einen elektrischen Versorgungskreis für das Bestrahlungsmittel schließt, sobald jemand in die Nähe der Vorrichtung kommt. Ein solcher Näherungsschalter kann zusätzlich ein Strömen der Flüssigkeit bewirken. Beispielsweise kann bei einer Trinkwasserarmatur das Ventil, das die Leitung öffnet und/oder schließt, ebenfalls durch den Näherungsschalter geöffnet und/oder geschlossen werden. Aufgrund der Tatsache, dass elektrischer Strom schneller fließt als Wasser, leuchten die LEDs früher als das Wasser am Auslauf eintritt. Dadurch kann kein Wasser ausfließen, ohne desinfiziert zu werden. Auch die Wände und eventuelle Restbestände von Wasser innerhalb der Vorrichtung werden sicher desinfiziert. Alternativ ist es vorgesehen, den Stromkreis für das Desinfektionsmittel mittels eines Kontaktes durch die Flüssigkeit selbst zu schließen.

Zusätzlich sind Mittel zur Steuerung beispielsweise einer Zwischendurchbestrahlung und/oder -spülung bei längeren Wasserentnahmepausen vorgesehen. Wenn eine Vorrichtung über einen längeren Zeitraum nicht genutzt wird, können ein oder mehrere UV-Strahler eingeschaltet werden. Dies erfolgt beispielsweise zeitgesteuert, alternativ wird ein kurzzeitiges Öffnen der Vorrichtung veranlasst, um eine Zwischendurchspülung durchzuführen.

Weiterhin ist vorgesehen, Temperatur-, Mengen- und/oder Druckfühler in die Vorrichtung zu integrieren.

Idealerweise besitzt die Vorrichtung zusätzliche Mittel zur Strömungsbeeinflussung, insbesondere Luftbeimischung. Diese können beispielsweise Elemente eines Strahlreglers, einer Mischdüse und/oder eines Luftsprudlers sein, der einen Flüssigkeitsstrahl mit Luftperlen versetzt. Dadurch entsteht bei geringerem Verbrauch ein Flüssigkeitsstrahl mit hohem Hygienekomfort. Letzterer wird bei Verwendung von UV-C-Strahlern noch dadurch unterstützt, dass deren Strahlung und/oder ein Teil davon fluoreszierende Wirkung auf den aus dem Auslauf austretenden oder über einen Auslauf fließenden Flüssigkeitsstrahl besitzt. Da UV-C-Licht nicht farblos ist, erscheint beispielsweise Wasser in einer hellen, blauen Farbe, was optisch sichtbar dessen Desinfektion anzeigt. Und das Hygieneempfinden wird dadurch unterstützt.

Nach der Erfindung kann die Vorrichtung Mittel zur Verbindung mit und/oder Anordnung an einer Armatur, insbesondere einer Trink-, Brauch- und/oder Grauwasserarmatur, aufweisen. Dies können beispielsweise Schraubverbindungen, Klemmverbindungen, Bajonettverbindungen, universelle Kupplungselemente oder dergleichen sein. Dadurch sind auch bestehende Armaturen mit einer erfindungsgemäßen Vorrichtung ständig oder temporär nach- oder umrüstbar. Dies ist von besonderem Vorteil für Reisende, die bei nachteiligen hygienischen Bedingungen auf eine sichere Wasserqualität Wert legen.

Idealerweise besitzt die Vorrichtung die äußeren Abmessungen eines StandardStrahlreglers oder eines Standard-Luftsprudlers. Durch eine Anpassung der äußeren Abmessungen des Luftsprudlers an gängige Standardgrößen ist eine Vorrichtung geschaffen, die zu einem Luftsprudler als einem Standardbauteil, das bei einer überwiegenden Zahl von Herstellern Verwendung findet, kompatibel ist. Verbreitet sind beispielsweise Strahlregler oder Luftsprudler mit einem Innengewindeanschluss M22 x 1 oder einem Außengewindeanschluss M24 x 1. Die Strahlerleistung ist auf die definierten Raum- und Auslaufverhältnisse eines solchen Standardstrahlreglers oder - luftsprudlers abgestimmt. Damit ist die erfindungsgemäße Vorrichtung in einfacher Art und Weise bei bestehenden Armaturen, beispielsweise anstelle eines Standardluftsprudlers, nachrüstbar.

Wie schon zuvor erwähnt kann die Vorrichtung eine Wasserentnahmestelle einer Trinkwasserleitung bilden, wodurch eine Vielzahl an Anwendungsgebieten erschlossen ist.

Die Erfindung ist bei Sanitärarmaturen wie bei Waschtischen, Bidets, Spülen oder bei Wannenausläufen nutzbar.

Die Erfindung bleibt nicht auf Standardbauteile beschränkt, sondern wird auch bei den unterschiedlichsten, individuellen Sanitärarmaturenausführungen, wie sie beispielsweise bei Duschköpfen, Wannenausläufen oder bei Einspritzdüsen im Pool- oder Wannenbereich vorkommen, benutzt. Im Rahmen der Erfindung sollen auch Düsen oder dergleichen als Auslauf verstanden werden. Die Verwendung der Erfindung ist somit ebenfalls bei geschlossenen Brauchwassersystemen, in denen die Bildung von Bakterien oder dergleichen üblicherweise sehr hoch ist, vorgesehen und von großem Vorteil.

Ausführungsbeispiele der Erfindung sind in den Zeichnungen dargestellt und werden im Folgenden näher beschrieben. Der besseren Übersichtlichkeit halber sind schematische Darstellungen gezeigt. Es zeigen die
- Fig. 1: eine Sanitärarmatur gemäß dem Stand der Technik; die
- Fig. 2: eine zweite erfindungsgemäße Vorrichtung in Form eines Luftsprudlers; die
- Fig. 3, 4: Detailansichten (Seitenansicht, Draufsicht) des erfindungsgemäßen Luftsprudlers; die
- Fig. 5: einen weiteren erfindungsgemäßen Luftsprudler in dreidimensionaler Ansicht; die
- Fig. 6: eine weitere erfindungsgemäße Vorrichtung in Form einer Rohrleitung und die
- Fig. 7: eine weitere erfindungsgemäße Vorrichtung mit einem flächig gestalteten Auslauf.

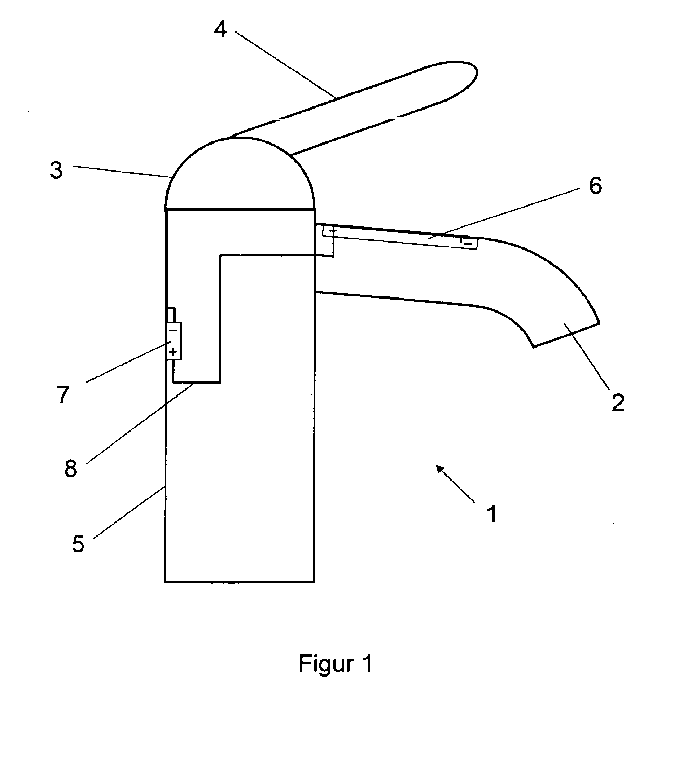

Die Fig. 1 zeigt - in schematischer Darstellung - eine Sanitärarmatur 1 mit einem Auslauf 2, einem Armaturenkopf 3 mit einem Hebel 4 und einem Armaturenfuß 5 gemäß dem Stand der Technik. In die Vorrichtung 1 ist ein Mittel zur Bestrahlung 6 in den Auslauf 2 integriert, das eine im Auslauf 2 befindliche und/oder durch diesen durchfließende Flüssigkeit mit UV-Licht bestrahlt. In den Armaturenfuß 5 ist ein elektrisches Versorgungsmittel 7, beispielsweise eine Batterie, integriert. Das elektrische Versorgungsmittel 7 ist austauschbar am Rand des Armaturenfußes 5 angeordnet. Das elektrische Versorgungsmittel 7 versorgt das Bestrahlungsmittel 6 über eine elektrische Leitung 8 mit einer Spannung im Niedervoltbereich, einer so genannten Kleinspannung. Der elektrische Stromkreis ist über den Armaturenkörper geschlossen. Das Bestrahlungsmittel 6 weist zur Bestrahlung einer durch den Auslauf 2 ausströmenden Flüssigkeit ein oder mehrere, hier nicht einzeln dargestellte, UV-C-Strahler auf. Das Bestrahlungsmittel 6 weist eine hohe Desinfektionswirkung bei niedrigem Energieverbrauch auf. Aufgrund des niedrigen Energieverbrauchs kann das elektrische Versorgungsmittel 7 das Bestrahlungsmittel 6 mit einer Kleinspannung oder einer Spannung im Niedervoltbereich versorgen. Aufgrund der hohen Desinfektionswirkung des Bestrahlungsmittels 6 ist eine Desinfektion einer vergleichsweise schnell ausströmenden Flüssigkeit ermöglicht. Auch bei einer geringen Verweilzeit einer Flüssigkeit beim Durchströmen der Sanitärarmatur 1 wird eine auslaufende Flüssigkeit zuverlässig desinfiziert. Der oder die UV-C-Strahler senden Licht mit einer Wellenlänge von 100 - 280 nm aus. Ideal ist eine Wellenlänge von 254 nm, genauer 253,7 nm. Vorhandene Bakterien, Legionellen, Viren, Hefen, Pilze oder dergleichen werden in kürzester Zeit unschädlich gemacht. Durch die Integration des elektrischen Versorgungsmittels 7 in die Armatur 1 wird keine extern angeordnete Energieversorgungsquelle benötigt. Und durch die elektrische Versorgung des Bestrahlungsmittels 6 mit einer Kleinspannung ist die erfindungsgemäße Sanitärarmatur 1 ohne Sicherheitsrisiko verwendbar. Durch die erfindungsgemäße Vorrichtung 1 ist eine vorteilhafte und einfache Möglichkeit geschaffen, eine Flüssigkeit ohne Sicherheitsrisiko und mit geringem Aufwand an der Stelle zu desinfizieren, wo diese aus einem geschlossenen Leitungssystem beispielsweise über eine Sanitärarmatur an eine Atmosphäre tritt. Die Flüssigkeit wird also unmittelbar an deren Ort des Gebrauchs, am sogenannten Point of Use (POU) desinfiziert.

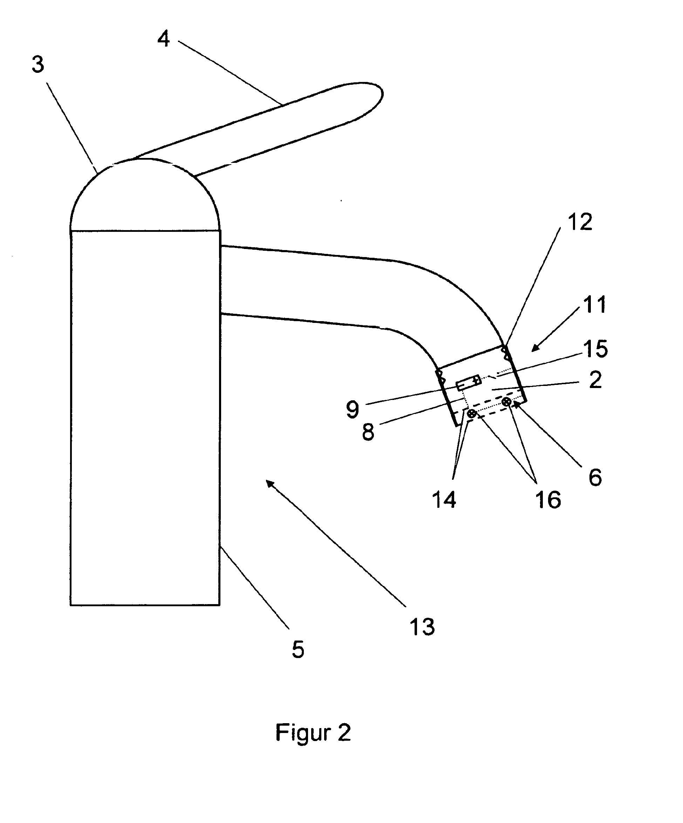

Die Fig. 2 zeigt eine erfindungsgemäße Vorrichtung in Form eines Luftsprudlers 11. Der Luftsprudler 11 ist mittels einer Schraubverbindung 12 an einer herkömmlichen Sanitärarmatur 13 befestigt. Ein Luftsprudler, auch Strahlregler oder Mischdüse genannt, wird üblicherweise bei Sanitärarmaturen zur Luftbeimischung benutzt. Ein solcher Luftsprudler versetzt einen ausfließenden Flüssigkeitsstrahl mit Luftperlen. Dazu weist der Luftsprudler 11 ein feinmaschiges Sieb 14 auf, durch das ein Flüssigkeitsstrahl hindurch fließt. Dadurch entsteht ein mit Luft versetzter Flüssigkeitsstrahl, der bei geringem Verbrauch einen hohen Hygienekomfort bietet. Die Verwendung eines Luftsprudlers ist bei Sanitärarmaturen üblich. Der Luftsprudler ist meist mittels einer Schraubverbindung an einer solchen befestigt. Verbreitet sind beispielsweise Luftsprudler mit einem Innengewindeanschiuss M22 x 1 oder einem Außengewindeanschluss M24 x 1. Die erfindungsgemäße Vorrichtung in Form eines Luftsprudlers 11 besitzt äußere Abmessungen eines Standardluftsprudlers.

Im Luftsprudler 11 befinden sich - in der Figur schematisch dargestellt - als elektrisches Versorgungsmittel eine Batterie 9, Bestrahlungsmittel 6 und ein Kontakt oder Schalter 15. Wiederum besteht das Bestrahlungsmittel 6 aus ein oder mehreren UV-C-Strahlern 16. Die UV-C-Strahler 16, beispielsweise UV-C-LEDs, sind im Siebeinsatz 14 des Luftsprudlers 11 angeordnet. Diese werden durch die Batterie 9 als elektrisches Versorgungsmittel mit einer Spannung im Niedervoltbereich, einer sogenannten Kleinspannung, versorgt. Durch die Verwendung von UV-C-LEDs ergeben sich folgende Vorteile. Sie sind robust, haben eine geringe Wärmeentwicklung, weisen eine geringe Baugröße und eine hohe Bestrahlungsintensität auf. Sie werden im Kleinspannungsbereich, beispielsweise bei 5 bis 10 oder 12 Volt betrieben und haben einen geringen Energieverbrauch. Die Verlustleistung von UV-C-LEDs beträgt dabei zwischen wenigen Mikrowatt und einigen Milliwatt. Darüber hinaus haben die verwendeten UV-C-LEDs eine lange Lebensdauer und sind verschleißfrei. Durch deren Positionierung unmittelbar am Auslauf 2 des Luftsprudlers 11 wird eine ausströmende Flüssigkeit unmittelbar vor deren Übertritt in die offene Atmosphäre, also unmittelbar am Ort ihres Gebrauchs, des sogenannten Point of Use (POU), desinfiziert. Durch den geringen Energieverbrauch der UV-C-LEDs oder UV-C-Strahler 16 ist nur ein geringer Platzbedarf im Luftsprudler 11 erforderlich. Zudem führt der geringe Energieverbrauch der UV-C-LEDs zu einer langen Lebensdauer der Batterie 9. Die Batterie 9 ist austauschbar angeordnet oder kann zusammen mit der Vorrichtung 11 ausgetauscht werden.

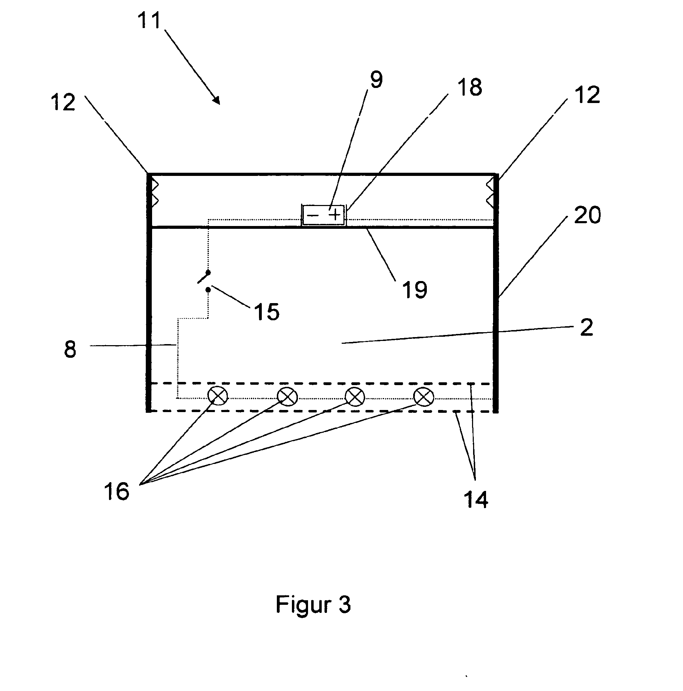

Die Fig. 3 zeigt den Luftsprudler 11 aus Fig. 2 in einer Seitenansicht. Der Luftsprudler 11 weist ein Anschlussgewinde 12 zur Verbindung mit einer Sanitärarmatur 13, einen Auslauf 2 und ein Sieb 14 auf. UV-C-Strahler 16, als UV-C-LEDs ausgeführt, sind im Sieb 14 angeordnet. Ein elektrisches Versorgungsmittel, eine Batterie 9, zur Versorgung der UV-C-Strahler 16 ist mittels einer Halterung 18, die durch Verstrebelemente 19 im luftsprudler 11 gehalten ist, angeordnet. In der Darstellung ist das elektrische Versorgungsmittel in der Mitte des Luftsprudlers 11 angeordnet. Erfindungsgemäß ist auch eine andere Position des elektrischen Versorgungsmittels, wie beispielsweise an einer Wandung des Luftsprudlers 11, vorgesehen. Alternativ kann ein solches elektrisches Versorgungsmittel auch innerhalb des Siebes 14 angeordnet und durch dieses gehalten sein. Im Luftsprudler 11 ist innerhalb des Stromkreises 8, der die UV-C-Strahler 16 mit der Batterie 9 verbindet, ein Schalter 15 angeordnet, durch den der Stromkreis zu den UV-C-Strahlern 16 geschlossen wird. Es handelt sich beim Schalter 15 um einen elektrischen Kontakt, der durch ausfließende Flüssigkeit geschlossen wird. In der Darstellung ist der weitere Stromkreis über eine in eine Wand 20 des Luftsprudlers 11 integrierte Leitung geführt. Der Auslauf 2 weist im Innern Wandflächen auf, die reflektierend gestaltet sind. Eine Reflexion der UV-C-Strahler im Innern des Auslaufs 2 wird beispielsweise durch polierte Edelstahl- oder Chromflächen erreicht. Zusätzlich ist der Auslauf 2 totraumfrei ausgeführt.

Sobald ausfließende Flüssigkeit den Kontakt oder den Schalter 15 schließt, leuchten die UV-C-Strahler 16 und austretendes Wasser wird desinfiziert. Alternativ zu einem solchen Kontaktschalter 15 kann im Luftsprudler auch ein Näherungsschalter angeordnet sein, der einen elektrischen Versorgungskreis für die UV-C-LEDs schließt, sobald ein Benutzer in die Nähe der Vorrichtung kommt.

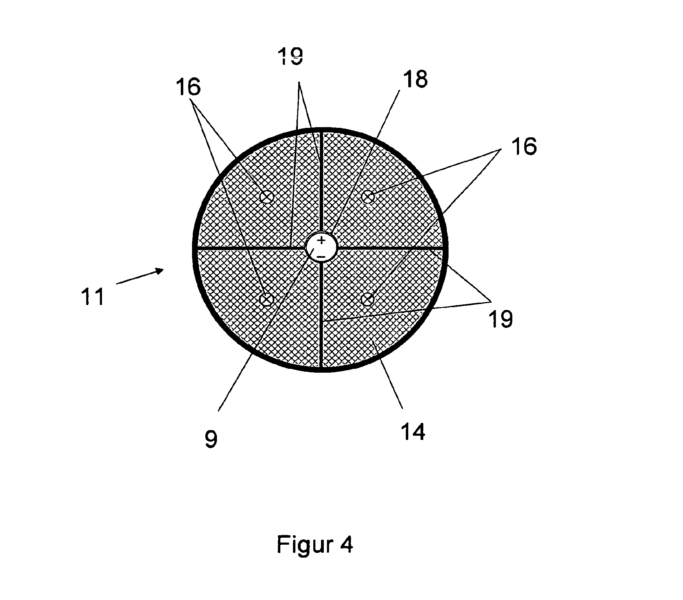

Fig. 4 zeigt nun den erfindungsgemäßen Luftsprudler 11 in dessen Draufsicht. Hier ist das feinmaschige Sieb 14 des Luftsprudlers 11 zu erkennen. Für die UV-C-LEDs oder UV-C-Strahler 16 gibt es innerhalb des Siebes 14 und/oder innerhalb des Luftsprudlers 11 mehrere Möglichkeiten einer Anordnung. Exemplarisch ist ein Luftsprudler 11 mit vier symmetrisch um einen Mittelpunkt des Luftsprudlers 11 angeordneten UV-C-LEDs oder UV-C-Strahlern 16 gezeigt. Mittels mehrerer Verstrebungen 19 wird eine als Knopfzelle ausgeführte Batterie 9 in einer Halterung 18 gehalten.

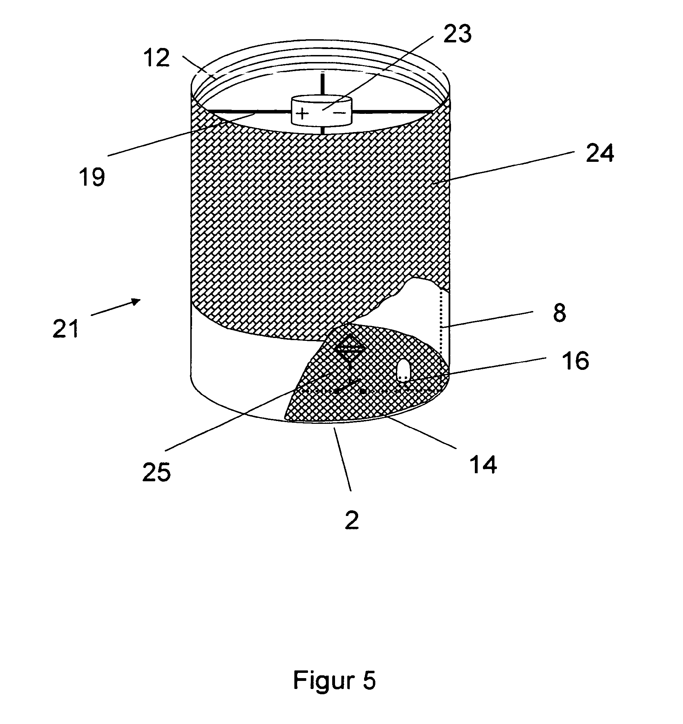

Die Fig. 5 zeigt einen weiteren Luftsprudler 21 in dreidimensionaler Ansicht. Dieser weist erneut Mittel zur Verbindung mit einer Sanitärarmatur auf. In der Figur sind diese als Anschlussgewinde 12 dargestellt. Es kann sich aber auch um andere Mittel zur Verbindung wie ein universelles Kupplungselement handeln. Im Sieb 14 des Luftsprudlers 21 sind wiederum UV-Leuchtmittel oder UV-C-Strahler 16 angeordnet. Zur elektrischen Energieerzeugung dient bei diesem Luftsprudler 21 ein Solarenergie umwandelndes Mittel. Dazu ist die Wandung des Luftsprudlers 21 mit Solarzellen 24 ausgestattet. Diese wandeln Lichtenergie in elektrische Energie um, die zur Versorgung der UV-Leuchtmittel 16 dient. Zusätzlich weist der Luftsprudler 21 eine mittels Verstrebungen 19 und Halterungen 18 gehaltenen Akkumulator 23 auf. Dieser wird durch die Solarzellen aufgeladen und dient der temporären Energiespeicherung. Durch ein solches in den Luftsprudler 21 integriertes Photovoltaik- oder Solarmodul ist eine langlebige autarke erfindungsgemäße Vorrichtung geschaffen. Durch die Verwendung eines Solarenergie umwandelnden Mittels ist die erfindungsgemäße Vorrichtung 21 von örtlichen Stromversorgungsgegebenheiten unabhängig. Durch die Mittel zur Verbindung mit und/oder Anordnung an einer, hier nicht dargestellten Armatur, insbesondere einer Trink-, Brauch- und/oder Grauwasserarmatur, ist eine Vorrichtung geschaffen, die von besonderem Vorteil für Reisende ist. Reisende können einen solchen Luftsprudler 21 - idealerweise ausgeführt mit einem universellen Kupplungselement - mitführen, um bei nachteiligen hygienischen Bedingungen vor Ort eine sichere Wasserqualität zu erreichen. Ein solcher universell verwendbarer Luftsprudler kann einfach an eine Sanitärarmatur vor Ort angebracht werden.

Zum Einschalten der UV-C-Strahler 16 ist im Luftsprudler 21 ein Näherungsschalter 25 angeordnet. Dieser schließt einen elektrischen Versorgungskreis für die UV-C-Strahler 16, sobald jemand in die Nähe des Luftsprudlers 21 kommt. Der Näherungsschalter 25 kann zusätzlich dafür verwendet werden, ein Strömen der Flüssigkeit zu bewirken. Dazu wird bei einer Armatur das Ventil, das die Leitung öffnet oder schließt, ebenfalls durch das Näherungsschaltersignal geöffnet oder geschlossen. Dazu sind beispielsweise - hier nicht dargestellte - elektrische Verbindungsleitungen und/oder Kontaktverbindungen vom Luftsprudler 21 zu einer Armatur vorgesehen. Alternativ ist vorgesehen, einen ohnehin in einer Armatur vorhandenen, zum Öffnen oder Schließen der Armatur benutzten Näherungsschalter zum Schließen oder Öffnen des Stromkreises für das UV-Bestrahlungsmittel zu verwenden. Durch die Anordnung der UV-C-Strahler 16 unmittelbar am Auslauf 2 des Luftsprudlers 21 wird zusätzlich ein optisch sichtbarer Effekt erzielt. Das Wasser erscheint in einer hellen, blauen Farbe, was dessen Desinfektion anzeigt und das Hygieneempfinden verstärkt.

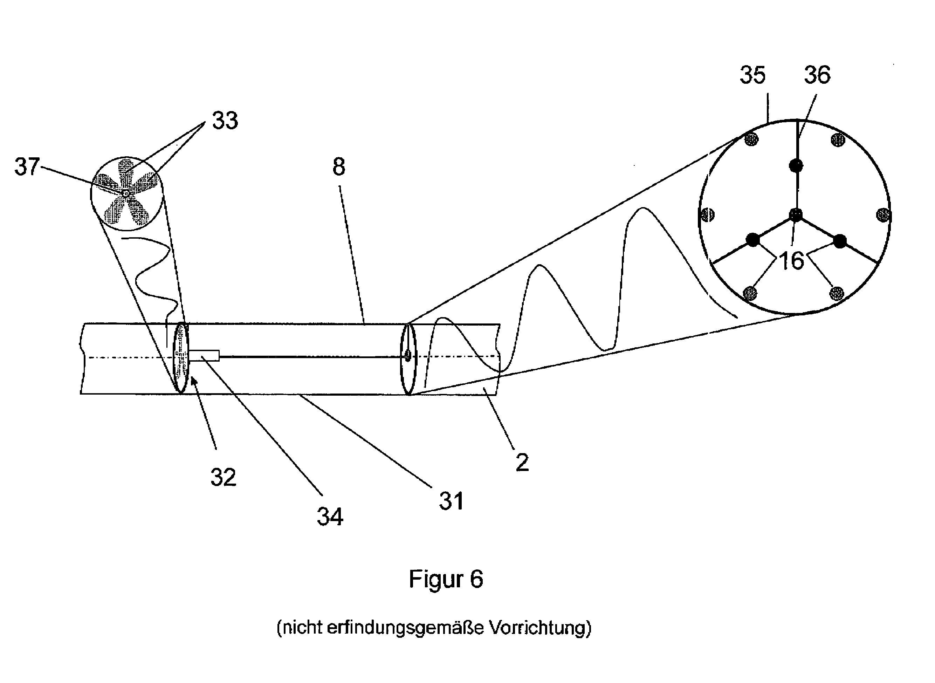

Die Fig. 6 zeigt eine weitere, nicht erfindungsgemäße Vorrichtung in Form einer Rohrleitung 31. In der Rohrleitung 31 ist eine Turbineneinheit 32 mit Schaufeln 33 eingebaut. Die Turbinenschaufeln 33 werden von der durch die Vorrichtung strömende Flüssigkeit angetrieben. Über eine mit den Turbinenschaufeln 33 verbundene Welle 37 wird ein Generator 34 angetrieben, der die entstehende Rotationsenergie in elektrische Energie umwandelt. In der Rohrleitung 31 ist eine Halterung 35 mit Verstrebungen 36 angeordnet. Die sternförmige Verstrebung dient dabei der Befestigung der UV-Strahler 16. Dadurch sind verschiedene Möglichkeiten geschaffen, die UV-Strahler 16 innerhalb einer Rohrleitung 31 zu platzieren. Eine solche erfindungsgemäße Rohrleitungsdesinfektionsvorrichtung ist beispielsweise als Verbindungsleitung zu einem Toiletten-Spülkasten verwendbar.

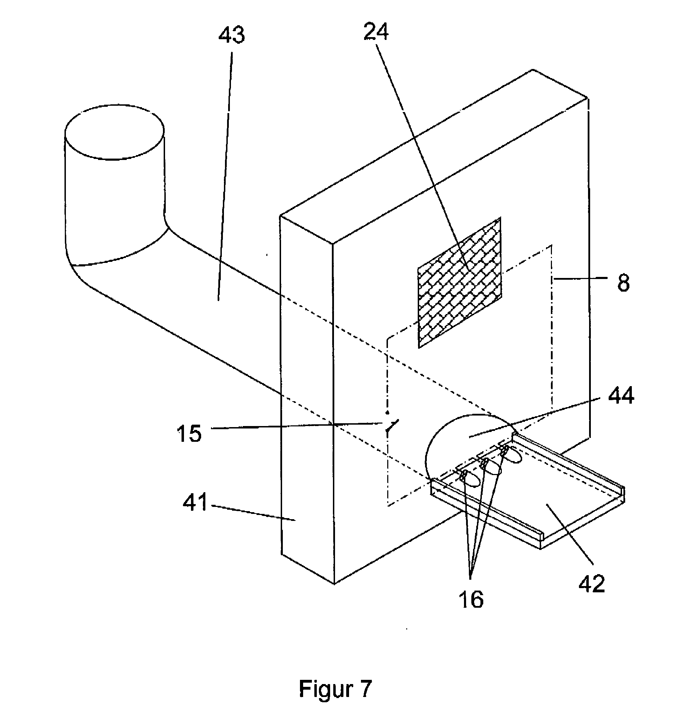

Die Fig. 7 zeigt eine weitere nicht erfindungsgemäße Vorrichtung, die zum Beispiel bei Wannenausläufen Verwendung findet. An einem Armaturenkörper 41 ist ein flächig gestalteter Auslauf 42 angeordnet. Das elektrische Versorgungsmittel ist durch ein Solarmodul, bestehend aus Solarzellen 24 und einem - hier nicht dargestellten - Energiespeicher, gebildet, wobei das Solarmodul an dem Armaturenkörper 41 angeordnet ist oder in diesen integriert ist. Der Armaturenkörper ist mit einer Rohrleitung 43 verbunden, die im Armaturenkörper 41 fortgesetzt ist und bei einer Öffnung 44 in den flächig gestalteten Auslauf (42) mündet. Ausfließendes Wasser wird durch am Auslauf 42 angeordnete UV-Strahler 16 desinfiziert. Innerhalb des Armaturenkörpers 41 ist ein Schalter 15 vorgesehen, der den Stromkreis für die UV-Strahler 16 schließt, sobald durchströmende Flüssigkeit dessen elektrische Kontakte schließt. Der gezeigte Auslauf 42 besteht zumindest zu einem Teil aus UV-lichtdurchlässigem Material, beispielsweise Quarzglas. Die UV-C-Strahler 16 strahlen in das UV-lichtdurchlässige Material hinein, wodurch der gesamte lichtdurchlässige Bereich mit UV-C-Strahlung durchsetzt ist. Die ausfließende Flüssigkeit überströmt den flächig gestalteten Auslauf 42, der mit UV-C-Strahlung durchsetzt ist, und wird auf diese Weise desinfiziert. Mit einer solchen Anordnung kann eine Verweilzeit einer zu desinfizierenden Flüssigkeit, während der die Flüssigkeit einer UV-Bestrahlung ausgesetzt ist, vergrößert werden. Infolgedessen ist bei einer solchen Anordnung eine geringere Bestrahlungsstärke ausreichend. Erfindungsgemäß ist es ebenfalls vorgesehen, die UV-Bestrahlungsmittel innerhalb eines solchen flächigen Auslaufes anzuordnen.

Die Erfindung ist beispielsweise bei Sanitärarmaturen, wie Waschtischen, Bidets. Spülen, Wannenausläufen, Duschköpfen oder Einspritzdüsen im Schwimmbadbereich nutzbar.

## Patentansprüche

1. Vorrichtung mit einem Auslauf (2, 42) für eine Flüssigkeit, insbesondere Wasser, wobei die Flüssigkeit am Auslauf (2, 42) aus einem geschlossenen Leitungssystem an eine offene Atmosphäre tritt und mit einem Mittel zur Bestrahlung (6) der Flüssigkeit mit UV-Licht, wobei das Mittel zur Bestrahlung (6) elektrisch versorgbar und am Auslauf (2, 42) angeordnet oder in diesen integriert ist,
**dadurch gekennzeichnet, dass**
die Vorrichtung als Luftsprudler (11) ausgebildet ist, wobei das Mittel zur Bestrahlung (6) für eine Desinfektionswirkung bei niedrigem Energieverbrauch ein oder mehrere UV-C-LEDs aufweist, welche die ausströmende Flüssigkeit unmittelbar vor deren Übertritt in die offene Atmosphäre, an deren Ort des Gebrauchs, desinfizieren und ein elektrisches Versorgungsmittel (7) das Bestrahlungsmittel (6) mit einer Kleinspannung versorgt, die bis zu 25V Wechselspannung oder 60V Gleichspannung beträgt, und das Bestrahlungsmittel (6) in einem Siebeinsatz (14) des Luftsprudlers (11) angeordnet ist.

2. Vorrichtung nach Anspruch 1, **dadurch gekennzeichnet, dass** das elektrische Versorgungsmittel (7) in den Auslauf (2, 42) und/oder die Vorrichtung integriert ist.

3. Vorrichtung nach einem der Ansprüche 1 oder 2, **dadurch gekennzeichnet, dass** das elektrische Versorgungsmittel (7) eine Batterie (9) ist.

4. Vorrichtung nach einem der Ansprüche 1 bis 3, **dadurch gekennzeichnet, dass** das elektrische Versorgungsmittel (7) durch eine Turbine und/oder eine Turbineneinheit (32), die von einer durch die Vorrichtung strömenden Flüssigkeit angetrieben wird, gebildet ist.

5. Vorrichtung nach einem der Ansprüche 1 bis 4, **dadurch gekennzeichnet, dass** das elektrische Versorgungsmittel (7) durch ein Solarenergie umwandelndes Mittel gebildet ist, das am Auslauf (2, 42) und/oder an der Vorrichtung angeordnet ist.

6. Vorrichtung nach einem der Ansprüche 1 bis 5, **dadurch gekennzeichnet, dass** der Auslauf (2, 42) im Innern reflektierend gestaltet ist.

7. Vorrichtung nach einem der Ansprüche 1 bis 6, **dadurch gekennzeichnet, dass** Mittel zur Steuerung und/oder Temperatur-, Mengen- und/oder Druckfühler integriert sind.

8. Vorrichtung nach einem der Ansprüche 1 bis 7, **dadurch gekennzeichnet, dass** die Vorrichtung zusätzliche Mittel zur Luftbeimischung (14) besitzt.

9. Vorrichtung nach einem der Ansprüche 1 bis 8 **dadurch gekennzeichnet, dass** die Vorrichtung Mittel (12) zur Verbindung mit und/oder Anordnung an einer Armatur aufweist.

## Claims

1. Device having an outlet (2, 42) for a liquid, in particular water, wherein the liquid at the outlet (2, 42) enters an open atmosphere from a closed conduction system, and having a means for irradiating (6) the liquid with UV light, it being possible for the irradiation means (6) to be supplied with electrical power and the irradiation means (6) being arranged at the outlet (2, 42) or integrated in said outlet,
**characterized in that**
the device is designed as an aerator (11), wherein the irradiation means (6) has one or more UV-C LEDs for a disinfection action together with a low level of energy consumption, which disinfect the outflowing liquid immediately before it is passed to the open atmosphere, at the location at which it is used, and an electrical supply means (7) supplies the irradiation means (6) with a low voltage which is up to 25V AC or 60V DC, and the irradiation means is arranged in a screen insert (14) of the aerator (11).

2. Device according to Claim 1, **characterized in that** the electrical supply means (7) is integrated in the outlet (2, 42) and/or the device.

3. Device according to either of Claims 1 and 2, **characterized in that** the electrical supply means (7) is a battery (9).

4. Device according to one of Claims 1 to 3, **characterized in that** the electrical supply means (7) is formed by a turbine and/or a turbine unit (32) which is driven by a liquid which flows through the device.

5. Device according to one of Claims 1 to 4, **characterized in that** the electrical supply means (7) is formed by a means which converts solar energy and is arranged at the outlet (2, 42) and/or on the device.

6. Device according to one of Claims 1 to 5, **characterized in that** the outlet (2, 42) is designed to be reflective in the interior.

7. Device according to one of Claims 1 to 6, **characterized in that** control means and/or temperature, quantity and/or pressure sensors are integrated.

8. Device according to one of Claims 1 to 7, **characterized in that** the device has additional means (14) for admixing air.

9. Device according to one of Claims 1 to 8, **characterized in that** the device has means (12) for connection to and/or arrangement on a fitting.

## Revendications

1. Dispositif avec une sortie (2, 42) pour un liquide, notamment de l'eau, le liquide sortant au niveau de la sortie (2, 42) hors d'un système de conduite fermé, au niveau d'une atmosphère ouverte, et pouvant être alimenté en moyen d'éclairage (6) du liquide en lumière UV, le moyen d'éclairage (6) pouvant être alimenté électriquement et étant disposé au niveau de la sortie (2, 42) ou intégré dans celle-ci ;
**caractérisé en ce que** :
le dispositif prend la forme d'un dispositif de mise en effervescence de l'air (11), le moyen d'éclairage (6) comportant, pour un effet de désinfection avec une plus faible consommation d'énergie, une ou plusieurs DELs UV-C désinfectant le liquide sortant directement avant son passage dans l'atmosphère ouverte, sur le lieu de l'utilisation, et un moyen d'alimentation (7) électrique alimentant le moyen de rayonnement (6) en petite tension pouvant atteindre une tension alternative de 25V ou une tension continue de 60V et le moyen de rayonnement (6) étant disposé dans un insert à crible (14) du dispositif de mise en effervescence de l'air (11).

2. Dispositif selon la revendication 1, **caractérisé en ce que** le moyen d'alimentation électrique (7) est intégré dans la sortie (2, 42) et/ou le dispositif.

3. Dispositif selon l'une quelconque des revendications 1 ou 2, **caractérisé en ce que** le moyen d'alimentation (7) électrique est une batterie (9).

4. Dispositif selon l'une quelconque des revendications 1 à 3, **caractérisé en ce que** le moyen d'alimentation électrique (7) est formé par une turbine et/ou une unité de turbine (32) entraînée par un liquide traversant le dispositif.

5. Dispositif selon l'une quelconque des revendications 1 à 4, **caractérisé en ce que** le moyen d'alimentation électrique (7) est formé par un moyen de conversion de l'énergie solaire disposé au niveau de la sortie (2, 42) et/ou au niveau du dispositif.

6. Dispositif selon l'une quelconque des revendications 1 à 5, **caractérisé en ce que** la sortie (2, 42) est réalisée de façon réfléchissante à l'intérieur.

7. Dispositif selon l'une quelconque des revendications 1 à 6, **caractérisé en ce que** des moyens de commande et/ou des capteurs de température, de quantité et/ou de pression sont intégrés.

8. Dispositif selon l'une quelconque des revendications 1 à 7, **caractérisé en ce que** le dispositif possède des moyens supplémentaires pour le mélange d'air (14).

9. Dispositif selon l'une quelconque des revendications 1 à 8, **caractérisé en ce que** le dispositif comporte des moyens (12) de jonction et/ou d'agencement à une armature.
